# EUROPEAN PATENT APPLICATION

(11) **EP 4 579 902 A1**
(43) Date of publication of application: **02.07.2025**
(21) Application number: 24849552.5
(22) Date of filing: 30.07.2024
(51) Int. Cl.: H01M 50/155, H01M 50/152, H01M 10/643, H01M 10/6551, H01M 50/213, H01M 50/249

(54) **CAP ASSEMBLY FOR SECONDARY BATTERY, SECONDARY BATTERY, BATTERY PACK, AND MOVING MEANS**

(30) Priority: 01.08.2023 KR 20230100295
(71) Applicant: LG Energy Solution, Ltd., Seoul 07335 (KR)
(72) Inventor: LEE, Byoungkook, Daejeon 34122 (KR); KANG, Taehong, Daejeon 34122 (KR); KIM, Ki Hoon, Daejeon 34122 (KR)
(74) Representative: Goddar, Heinz J.
(86) International application number: PCT/KR2024/011098
(87) International publication number: WO 2025/028985

(57) **Abstract**

The present invention relates to a cap assembly for a secondary battery, including a top cap electrically connected to the outside and a gasket surrounding an outer peripheral portion of the top cap, wherein the top cap has a thermally conductive layer provided on one surface.

## Description

### [Technical Field]

This application claims priority to and the benefit of Korean Patent Application No. 10-2023-0100295 filed in the Korean Intellectual Property Office on August 1, 2023, the entire contents of which are incorporated herein by reference.

The present invention relates to a cap assembly for a secondary battery, a secondary battery, a battery pack, and a transportation means.

### [Background Art]

In general, a secondary battery refers to a battery that is chargeable and dischargeable unlike a primary battery that is not chargeable, and the secondary battery is widely used in the field of high-tech electronic devices such as a phone, a laptop computer and a camcorder.

The stability of the secondary battery may be secured by a test for stability in which one surface is compressed with a press to measure an internal short circuit.

Depending on a shape of a battery case, the secondary battery is classified into a cylindrical battery and a prismatic battery in which an electrode assembly is embedded in a cylindrical or prismatic metal battery case, and a pouch-type battery in which an electrode assembly is embedded in a pouch-type battery case made of an aluminum laminate sheet.

In addition, the electrode assembly embedded in the battery case is a chargeable/dischargeable power generating device having a stack structure of a positive electrode/a separator/a negative electrode, and is classified into a folding-type electrode assembly (jelly-roll) in which long sheet-like positive electrode and negative electrode coated with active materials are wound with a separator interposed therebetween, and a stack-type electrode assembly in which a plurality of positive electrodes and negative electrodes having predetermined sizes are sequentially stacked with separators interposed therebetween. Among these, the jelly-roll has the advantages of being easy to manufacture and having high energy density per weight. Consequently, the demand for cylindrical batteries including electrode assemblies with a jelly-roll structure is increasing.

Cylindrical batteries include an electrode assembly with a jelly-roll structure, a battery case, and a cap assembly. The cap assembly is a structure that is coupled to an opening of the battery case into which the electrode assembly is inserted. Since the cap assembly seals the battery case, the gas inside the battery may not be discharged to the outside in a normal situation.

Cylindrical batteries may undergo thermal runaway due to heat generated from a decomposition reaction of the electrode active materials included in the electrode assembly. If the cap assembly is not separated from the battery case at this time, the heat inside the battery case may damage the separator, cause short circuits of the positive electrode and negative electrodes, and lead to excessive current due to internal short circuits, potentially resulting in a fire or even an explosion.

In addition, the internal pressure of the battery case may increase due to the heat and gas inside the battery case not being discharged, which may cause the battery case to rupture.

### [Detailed Description of the Invention]

### [Technical Problem]

In view of the problems of the related art described above, the present invention is intended to provide a cap assembly for a secondary battery, a secondary battery, a battery pack, and a transportation means.

### [Technical Solution]

An exemplary embodiment of the present invention provides a cap assembly for a secondary battery, the cap assembly including a top cap electrically connected to an outside and a gasket configured to surround an outer peripheral portion of the top cap, wherein the top cap has a thermally conductive layer provided on one surface.

An exemplary embodiment of the present invention provides a secondary battery including an electrode assembly in which an electrode and a separator are wound; a case having a space into which the electrode assembly is introduced and having one side opened; and the above-described cap assembly coupled to the opened side of the case.

An exemplary embodiment of the present invention provides a battery pack including the secondary battery.

An exemplary embodiment of the present invention provides a transportation means including the battery pack.

### [Advantageous Effects]

The cap assembly for a secondary battery, the secondary battery, the battery pack, and the transportation means according to the exemplary embodiments of the present invention can prevent the battery case from rupturing by the top cap being melted by the heat generated from the decomposition reaction of the electrode active materials and thus preventing the runaway phenomenon.

### [Brief Description of Drawings]

FIG. 1(a) is a cross-sectional view showing a cap assembly according to an exemplary embodiment of the present invention, and FIG. 1(b) is a perspective view showing a top cap and a gasket according to an exemplary embodiment of the present invention.
FIG. 2(a) is a cross-sectional view showing a secondary battery according to another exemplary embodiment of the present invention, and FIG. 2(b) is a plan view showing a top cap and a battery case according to another exemplary embodiment of the present invention.

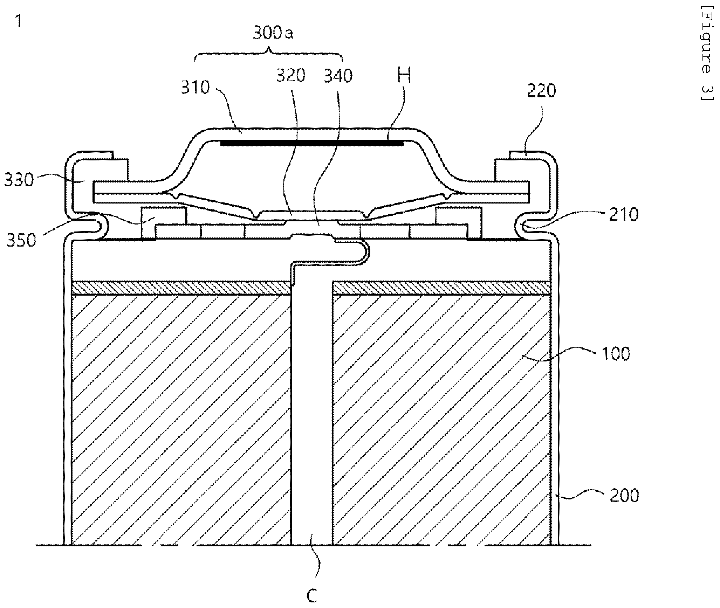

FIG. 3 is a cross-sectional view showing a secondary battery according to an exemplary embodiment of the present invention.
FIG. 4 is a perspective view showing a battery pack according to an exemplary embodiment of the present invention.
FIG. 5 is a perspective view showing a transportation means according to an exemplary embodiment of the present invention.

### <Explanation of Reference Numerals and Symbols>

1: secondary battery
2: pack housing
3: battery pack
100: electrode assembly
200: battery case
210: beading portion
220: clamping portion
300a, 300b: cap assembly
310a, 310b: top cap
311: protrusion
312: rim portion
313: bridge
314: venting portion
320: safety vent
330: gasket
340: CID
350: CID gasket
C: core part
H: thermally conductive layer or thermally conductive material

### [Best Mode]

The detailed description of the present invention is intended to completely explain the present invention to one skilled in the art. Throughout the specification, unless explicitly described to the contrary, when one component "comprises (includes)" another component or "is characterized by" having a certain structure and a certain shape, this means that other components, structures, and shapes may be included without being excluded.

The present invention may be variously modified and may have various exemplary embodiments, and specific exemplary embodiments will be described in detail in the detailed description. However, the description of the exemplary embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, it should be noted that the drawings are provided for illustrating the present invention, and the scope of the present invention is not limited by the drawings.

A secondary battery 1 according to an exemplary embodiment of the present invention includes an electrode assembly 100, a battery case 200, and a cap assembly 300a, 300b. The secondary battery 1 according to an exemplary embodiment of the present invention is a cylindrical secondary battery. In the secondary battery 1 according to an exemplary embodiment, a cap assembly 300a may be coupled to an upper portion of the battery case 200, and a positive electrode uncoated portion and a negative electrode uncoated portion provided on a positive electrode and a negative electrode of the electrode assembly 100 may be provided in a short-axis direction of a positive electrode current collector and a negative electrode current collector, respectively.

In the secondary battery 1 according to another exemplary embodiment, a cap assembly 300b may be coupled to a lower portion of the battery case 200. The positive electrode uncoated portion and the negative electrode uncoated portion of the electrode assembly 100 may be provided in a long-axis direction of the positive electrode current collector and the negative electrode current collector, respectively.

In the case where the cap assembly 300a is coupled to the upper portion of the battery case 200, the cap assembly 300 may include a top cap 310, a safety vent 320, and a gasket 330. When the cap assembly 300 is coupled to the lower portion of the battery case 200, the cap assembly 300 may include a top cap 310 and a gasket 330.

The top cap 310 is located at the top of the cap assembly 300, and may protrude in an opposite direction to the center of the battery case 200.

A top cap 310a according to an exemplary embodiment may serve as an electrode terminal so that the protruding portion is electrically connected to the outside. For example, the top cap 310a may serve as a positive electrode terminal.

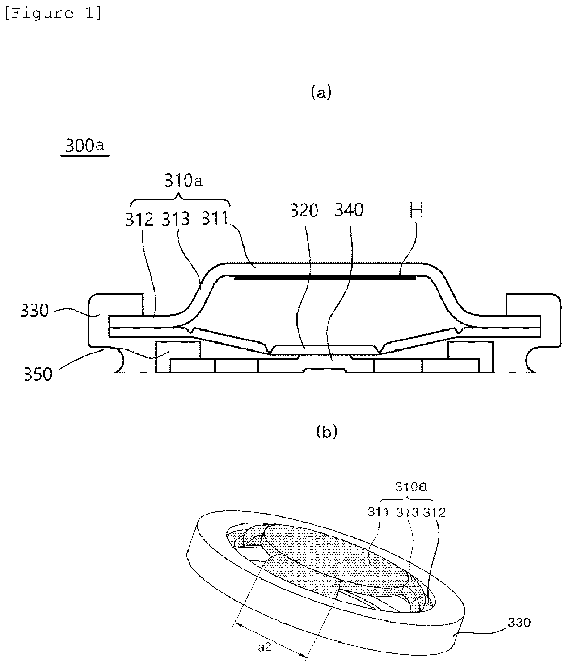

Referring to FIG. 1, the top cap 310a includes a protrusion 311 protruding upward, a rim portion 312 in contact with or surrounded by the safety vent 320 described below, and a bridge 313 connecting the protrusion 311 and the rim portion 312.

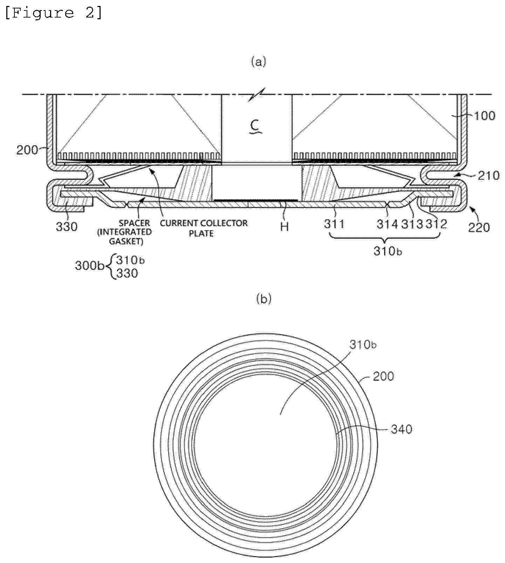

Referring to FIG. 2, the top cap 310b according to another exemplary embodiment may be provided with a venting portion 314 that prevents an internal pressure from increasing beyond a preset value due to gas generated inside the battery case 200. Specifically, the top cap 310b may include a protrusion 311, a rim portion 312, and a venting portion 314, and the venting portion 314 may be located between the protrusion 311 and the rim portion 312.

The venting portion 314 refers to a region of the top cap 310b, which has a thinner thickness compared to the surrounding region. The venting portion 314 is structurally vulnerable compared to the surrounding region. Therefore, if an abnormality occurs in the cylindrical secondary battery and the internal pressure of the battery case 200 increases above a certain level, the venting portion 314 may rupture and gas generated inside the battery case 200 may be discharged to the outside.

For example, the venting portion 314 may be formed by notching one side or both sides of the top cap 310b to partially reduce the thickness of the top cap 310b.

The top cap 310 is provided with a thermally conductive layer (H) on a lower surface, i.e., a surface facing the safety vent 320, and the thermally conductive layer (H) may include a material with a higher thermal conductivity than that of the top cap 310.

In other words, the cap assembly 300 may have the thermally conductive material coated on the lower surface of the top cap 310, and the thermally conductive material may be a material with a higher thermal conductivity than that of the top cap 310. For example, the top cap 310 may include iron or stainless steel, and the thermally conductive layer (H) or thermally conductive material may include a material with a higher thermal conductivity than that of iron or stainless steel.

Preferably, the top cap 310 may include iron, and the thermally conductive layer may include a material with a higher thermal conductivity than that of iron.

The thermally conductive layer (H) or thermally conductive material may be coated or laminated on a lower surface of the protrusion 311 of the top cap 310. A coating area of the thermally conductive material may be equal to or smaller than a lower surface area of the protrusion 311. Preferably, the coating area of the thermally conductive material may be smaller than the lower surface area of the protrusion 311. For example, the coating area of the thermally conductive material may be 30% to 70% based on 100% of the lower surface area of the protrusion 311.

Alternatively, the thermally conductive layer (H) may have a thermal conductivity of 50 W/m-K or higher. The thermal conductivity refers to a thermal conductivity of the thermally conductive layer (H) itself, regardless of the type, amount, thickness, and the like of the material forming the thermally conductive layer (H).

When the thermally conductive layer (H) or thermally conductive material satisfies the above thermal conductivity, if heat is generated in the electrode assembly 100, the portion coated with the thermally conductive material is melted or ruptured earlier than a portion not coated with the thermally conductive material, resulting in dissipation of the heat inside the battery case 200 to the outside.

In an exemplary embodiment, the thermally conductive material may include any one of a metal-based material, a ceramic-based material, a carbon-based material, and a polymer-based material.

For example, the metal-based material may include silver, copper, aluminum, or the like, and the ceramic-based material may include silicon carbide (SiC), beryllium oxide (BeO), aluminum nitride (AlN), aluminum oxide (Al₂O₃), or the like.

Furthermore, the thermally conductive layer or thermally conductive material may further include an electrically conductive material.

The gasket 330 may be located inside a crimping portion 220 of the battery case 200 described below. The gasket 330 can increase a sealing force between the top cap 310 and the battery case 200.

The safety vent 320 may be further included. The safety vent 320 is positioned below the top cap 310 and may be electrically connected to the top cap 310. At least a portion of a surface of the safety vent 320 facing the top cap 310 may be in contact with the top cap 310. The safety vent 320 is in contact with the top cap 310 for a certain length from its rim, and a portion excluding the contact length may be located away from the top cap 310. The portion of the safety vent 320 in contact with the top cap 310 may be coupled with the gasket 330.

In this case, the gasket 330 may be located inside the crimping portion 220 of the battery case 200. The gasket 330 can increase a sealing force between the safety vent 320 and the battery case 200.

A spacing distance between the safety vent 320 and the top cap 310 may increase from a region of the safety vent 320 in contact with the top cap 310 toward the center of the safety vent 320.

The safety vent 320 may include a contact portion in contact with the top cap 310, a central portion positioned at the center of the safety vent 320 and in contact with the current interruptive device, and a connection portion connecting the contact portion and the central portion. The safety vent 320 may be provided with bent portions (or notches) at portions where the contact portion and the connection portion are in contact and the connection portion and the central portion are in contact.

In an exemplary embodiment, the safety vent 320 may have an end portion perpendicular to an axial direction of the battery case 200. In this case, the top cap 310 may be provided perpendicular to the axial direction of the battery case 200, like the safety vent 320. That is, the safety vent 320 and the top cap 310 can be positioned horizontally.

In another exemplary embodiment, the safety vent 320 may have an end portion bent to surround an outer circumferential surface of the top cap 310.

In the secondary battery 1 according to an exemplary embodiment of the present invention, gas is generated or heat is generated as the electrode assembly 100 accommodated inside the battery case 200 reacts with the electrolyte solution, thereby increasing an internal pressure.

When the internal pressure of the secondary battery 1 increases, the safety vent 320 receives force in a direction of the top cap 310, and the bent portion ruptures, causing the gas inside the secondary battery 1 to be discharged.

The current interruptive device (CID) 330 is positioned below the safety vent 320, and at least a portion thereof may be connected to the safety vent 320.

When the safety vent 320 ruptures as the internal pressure of the secondary battery 1 increases, the current interruptive device 330 is separated from the safety vent 320 to interrupt the current.

More specifically, the current interruptive device 330 may include a connection portion connected to the safety vent 320 at a central portion and protruding in a direction in which the safety vent 320 is positioned, an edge portion excluding the connection portion, and a coupling portion connecting the connection portion and the edge portion. The coupling portion is provided in plural, and the plurality of coupling portions may be positioned spaced apart from each other.

When the safety vent 320 is deformed in the direction in which the top cap 310 is positioned, the coupling portion may be disconnected and the connection portion may be separated from the edge portion. That is, the connection portion is separated in the direction of the top cap 310 while being connected to the safety vent 320.

A CID gasket 350 surrounds an edge of the current interruptive device 330 and can electrically separate the safety vent 320 from the edge portion and coupling portion other than the connection portion of the current interruptive device 330.

The electrode assembly 100 includes a positive electrode, a separator, and a negative electrode. The electrode assembly 100 is a jelly-roll type chargeable/dischargeable power generating element that includes a positive electrode, a negative electrode, and a separator located between the positive electrode and the negative electrode and is wound.

In an exemplary embodiment, the electrode assembly 100 may be a jelly-roll structure in which a negative electrode, a separator, and a positive electrode are sequentially stacked and wound, or a first separator, a negative electrode, a second separator, and a positive electrode are sequentially stacked and wound.

The positive electrode includes a positive electrode active material portion having a positive electrode active material applied to one surface or both surfaces of a positive electrode current collector and a positive electrode uncoated portion having no positive electrode active material applied thereto.

The positive electrode current collector is a metal thin plate with excellent conductivity and may include, for example, an aluminum (Al) foil.

The positive electrode active material may include a lithium cobalt oxide with a high operating voltage and excellent capacity characteristics, a lithium nickel oxide with a high reversible capacity and used to easily implement a large-capacity battery, a lithium nickel cobalt oxide where a part of nickel is substituted with cobalt, a lithium nickel cobalt metal oxide where a part of nickel is substituted with manganese, cobalt, or aluminum, a lithium manganese-based oxide excellent in thermal stability and low in cost, a lithium iron phosphate excellent in stability, and the like.

The negative electrode includes a negative electrode active material portion having a negative electrode active material applied to one surface or both surfaces of a negative electrode current collector and a negative electrode uncoated portion having no negative electrode active material applied thereto.

The negative electrode current collector may include a metal thin plate with excellent conductivity, for example, a copper (Cu) or nickel (Ni) foil.

The negative electrode active material may be, for example, a carbon material such as crystalline carbon, amorphous carbon, carbon composite, or carbon fiber, lithium metal, a lithium alloy, or the like. In this case, the negative electrode active material may further include, for example, non-graphite-based SiO (silica), SiC (silicon carbide) or the like for high-capacity design.

The electrode assembly 100 according to an exemplary embodiment may have a positive electrode uncoated portion and a negative electrode uncoated portion provided in the short direction of the electrode current collector at both ends or in the middle of the positive electrode and negative electrode. In addition, a positive electrode tab and a negative electrode tab may be provided by being bonded to the positive electrode uncoated portion and the negative electrode uncoated portion.

The positive electrode tab and the negative electrode tab serve to transfer electrons collected in the current collectors to an external circuit, and may protrude in the same direction or opposite directions with respect to the electrode assembly of the jelly-roll structure.

The electrode assembly 100 according to another exemplary embodiment may have a positive electrode uncoated portion and a negative electrode uncoated portion provided in the long direction of the positive electrode current collector and the negative electrode current collector. The positive electrode uncoated portion and the negative electrode uncoated portion may be located at both ends in the short direction of the positive electrode current collector and the negative electrode current collector.

At least a portion of the positive electrode uncoated portion and the negative electrode uncoated portion may include a plurality of segments divided along a winding direction of the electrode assembly 100. The plurality of segments can be bent in a direction in which a core portion of the electrode assembly 100 is located. The plurality of bent segments can be overlapped in multiple layers. In this case, a first current collector and a second current collector can be combined in a region where the plurality of segments are overlapped in multiple layers.

In this case, the first current collector and the second current collector are included in both the secondary batteries 1 according to an exemplary embodiment and another exemplary embodiment, and may be located on facing surfaces, i.e., an upper surface and a lower surface, located in a height direction of the electrode assembly 100.

The first current collector and the second current collector are electrically connected to the battery case 200. The first current collector can function as a medium for electrical connection between the electrode assembly 100 and the battery case 200. Either the first current collector or the second current collector can be welded and fixed to an inner wall of the battery case 200.

The separator prevents an internal short circuit that may be generated when the positive electrode and the negative electrode come into contact with each other, and may include a porous material to facilitate migration of ions between the electrodes.

In an exemplary embodiment, the separator may include a base material layer made of a porous material. The base material layer may include, for example, any one selected from the group consisting of polyethylene (PE), polystyrene (PS), polypropylene (PP), and a copolymer of polyethylene (PE) and polypropylene (PP).

In another exemplary embodiment, the separator may include a safety reinforced separator (SRS). That is, the separator 130, 140 may include a base material layer made of a porous material and a coating layer coated and formed on the base material layer by applying a mixed slurry of inorganic particles and a binder polymer. Preferably, the coating layer includes ceramic particles and has a uniform pore structure formed by an interstitial volume between the ceramic particles that are a component of an active layer, in addition to a pore structure of the separator base material itself.

The coating layer may include ceramic particles including at least one selected from the group consisting of alumina, silica, TiO₂, SiC, and MgAl₂O₄. Such a coating layer is included, so that the safety of the electrode assembly can be enhanced. The coating layer may further include a lithium salt.

The battery case 200 may have a column structure with a space formed therein. The battery case 30 may accommodate the electrode assembly 100 including electrodes and a separator and an electrolyte solution (not shown) in the internal space.

The battery case 200 of the secondary battery 1 according to an exemplary embodiment may have a structure in which one side is open (hereinafter, referred to as an opening portion) and the other side is sealed.

The battery case 200 of the secondary battery 1 according to another exemplary embodiment may have a structure in which one side is open and the other side is sealed (sealed portion) except for a through hole in a center.

Here, one side and the other side of the battery case 200 refer to end portions located at an upper portion and a lower portion along the height direction of the electrode assembly 100 or secondary battery 1.

One side, which is open, of the battery case 200 may be provided with a beading portion 210 folded toward the center of the secondary battery 1. The battery case 200 may be provided with a crimping portion 220 between the beading portion 210 and the opening.

The battery case 200 may be made of a lightweight conductive metal material such as aluminum or aluminum alloy.

In the secondary battery 1 according to another exemplary embodiment, an electrode terminal may be coupled to a through hole provided on the other side of the battery case 200. For example, the electrode terminal may be secured on an inner surface of the sealed portion of the battery case 200 by riveting.

The battery case 200 and the cap assembly 300 have the same polarity, and the electrode terminal has a different electrode from those of the battery case 200 and the cap assembly 300. For example, when the electrode terminal is a positive electrode, the battery case 200 and the cap assembly 300 may be negative electrodes.

According to an exemplary embodiment of the present invention, a battery pack 3 including any one of the secondary batteries described above is provided.

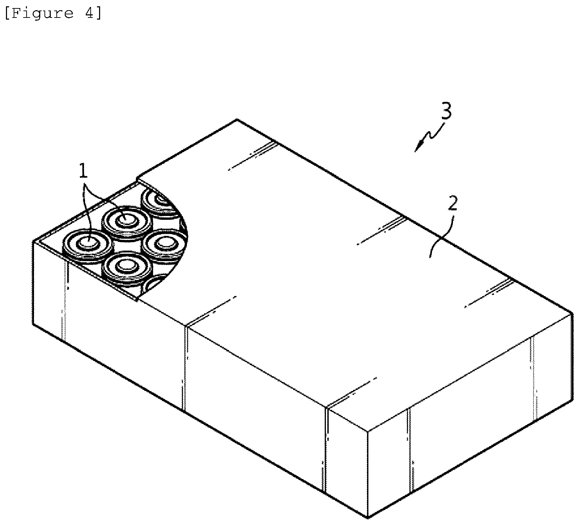

In relation to the above exemplary embodiment, referring referred to FIG. 4, a battery pack 3 including the secondary battery 1 in a pack housing 2 is shown.

The battery pack according to the above exemplary embodiment has high output/high capacity.

According to an exemplary embodiment of the present invention, a transportation means including the battery pack described above is provided.

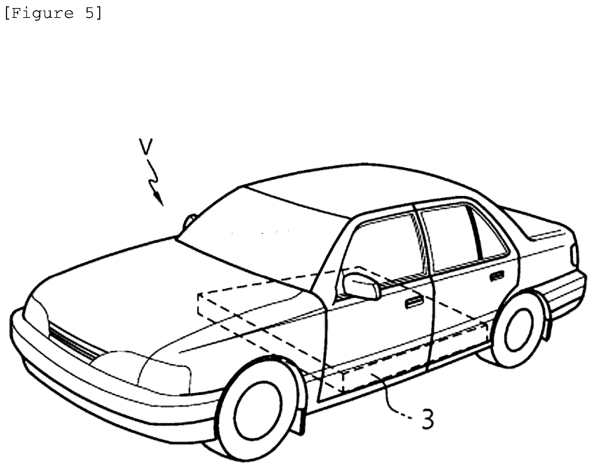

In relation to the above exemplary embodiment, referring to FIG. 5, a transportation means V including the battery pack 3 is shown.

Since the transportation means according to the above exemplary embodiment uses the battery pack having high output/high capacity, the transportation means is excellent in terms of stability and safety.

Although the present invention has been described with reference to preferred exemplary embodiments, it will be understood by one skilled in the art that various modifications and variations can be made to the present invention without departing from the technical spirit and scope of the present invention.

## Claims

1. A cap assembly for a secondary battery, the cap assembly comprising:
a top cap electrically connected to an outside; and
a gasket configured to surround an outer peripheral portion of the top cap,
wherein the top cap has a thermally conductive layer provided on one surface.

2. The cap assembly for a secondary battery of claim 1, wherein the thermally conductive layer comprises at least one of a metal-based material, a ceramic-based material, a carbon-based material, and a polymer-based material.

3. The cap assembly for a secondary battery of claim 1, wherein the thermally conductive layer has a higher thermal conductivity than that of the top cap.

4. The cap assembly for a secondary battery of claim 1, wherein the top cap comprises a protrusion, a rim portion, which is an outer peripheral portion in contact with the gasket, and a connection portion connecting the protrusion and the rim portion, and
wherein the thermally conductive layer is provided on one surface of the protrusion.

5. The cap assembly for a secondary battery of claim 1, further comprising a safety vent located on a lower side of the top cap, and
wherein the gasket surrounds an outer peripheral portion of at least one of the top cap and the safety vent.

6. The cap assembly for a secondary battery of claim 1, further comprising a current interruptive device (CID) and a current interruptive device gasket.

7. The cap assembly for a secondary battery of claim 1, wherein the top cap comprises a venting portion whose thickness is relatively thinner than a surrounding region.

8. A secondary battery comprising:
an electrode assembly in which an electrode and a separator are wound;
a case having a space into which the electrode assembly is introduced and having one side opened; and
the cap assembly of any one of claims 1 to 7 coupled to the opened side of the case.

9. A battery pack comprising the secondary battery of claim 8.

10. A transportation means comprising the battery pack of claim 9.
